# EUROPEAN PATENT SPECIFICATION

(11) **EP 2 829 169 B1**
(45) Date of publication and mention of the grant of the patent: **04.04.2018**
(21) Application number: 14177836.5
(22) Date of filing: 21.07.2014
(51) Int. Cl.: A01D 34/71, A01D 34/695, A01D 34/73

(54) **Lawn mower with post-compression blade**
Rasenmäher mit Nachkomprimierungsklinge
Tondeuse à gazon à lame de post-compression

(30) Priority: 24.07.2013 IT MI20131240
(43) Date of publication of application: 28.01.2015
(60) Divisional application: 15178058.2
(73) Proprietor: Stiga S.p.A. in breve anche St. S.p.A., 31033 Castelfranco Veneto (TV) (IT)
(72) Inventor: D'Agostini, Mauro, 35018 San Martino di Lupari (PD) (IT)
(74) Representative: Mittler, Enrico

(56) References cited:
- EP-A1- 0 542 459
- EP-A1- 1 300 063
- EP-A2- 0 821 869
- US-A- 4 083 166
- US-A- 4 245 455
- US-A- 5 069 025
- US-A- 5 884 463

## Description

The present invention relates to a lawn mower provided with a post-compression blade.

More specifically, the invention relates to a protection flange applied to a load-bearing body of the lawn mower, close to the rotating blade mounting a post-compression blade, so as to allow the formation of air flow required to drag the grass clippings into the bag arranged at the rear of the lawn mower.

It is known from the state of the art a lawn mower provided with a bag for collecting grass clippings, in which the load-bearing body is configured to form a path for circulating air therein by connecting a first path for circulating the air, laying on a cutting plane occupied by the rotating blade, with an inlet section of the bag for collecting the grass clippings, and connecting an intake of the bag with a second passageway for the air, laying on said cutting plane.

The state of the known art associates also said first air passageway with a toroidal-shaped channel, within which the cutting plane lays occupied by the peripheral portion of the rotating blade, said second passageway occupying a peripheral compartment above the cutting plane.

A system is indeed known from patent EP1300063, for circulating the air of a lawn mower comprising a toroidal channel and a flange provided with vents, both connected to a bag for collecting grass clippings. Both the toroidal channel and the flange provided with vents lay close to a cutting plane occupied by a rotating blade, both extending on the vertical projection of the peripheral portion of the rotating blade. A lawn mower according to the preamble of claim 1 is known from US4245455. One problem caused by an air circulating system applied to a lawn mower provided with a rotating blade, relates to the ability to reach a specific value in the difference in pressure between the toroidal channel and the bag for containing the grass clippings, corresponding to the first stretch of the air circulating system dragging the grass clippings, and between the same bag and the flange provided with vents, corresponding to the second stretch of the air circulating system after the air has let the quantity of grass clippings fall inside the bag.

The difference in pressure is not to be large inside an air circulating system applied to a lawn mower provided with a rotating blade in order to avoid excessive vibrations and noise or raising of dust.

At the same time, the same difference in pressure must not be small, in order to ensure the dragging of the grass clippings into the bag, thus avoiding the clogging of the channels along the path.

In view of the known state of the art, the object of the present invention is to make a lawn mower which allows the evacuation of the grass clippings to be improved through a channel of a load-bearing body connected to a bag for containing the grass clippings while avoiding the clogging of the channels along the path and thus reducing vibrations, noise and the raising of dust.

In accordance with the invention, such an object is achieved with a lawn mower according to claim 1. This and other features of the present invention will become increasingly apparent from the following detailed description of one of its non-limiting embodiment examples disclosed in the accompanying drawings, in which:
figure 1 shows an axonometric bottom view of a lawn mower according to the present invention;
figure 2 shows a bottom plan view of the lawn mower in figure 1;
figure 3 shows a side view of the lawn mower, partially cross-sectioned, according to the line III-III in figure 2;
figure 4 shows an enlarged detail A of the partial cross section of the lawn mower in figure 3;
figure 5 shows a front view of the lawn mower, partially cross-sectioned, according to the line V-V in figure 2;
figure 6 shows an enlarged detail B of the partial cross section of the lawn mower in figure 5;
figure 7 shows an axonometric bottom view of the lawn mower with a post-compression blade;
figure 8 shows a bottom plan view of the lawn mower in figure 7;
figure 9 shows a section according to the line IX-IX in figure 8;
figure 10 shows an enlarged detail C in figure 9;
figure 11 shows a side view of the post-compression blade;
figure 12 shows a top plan view of the post-compression blade.

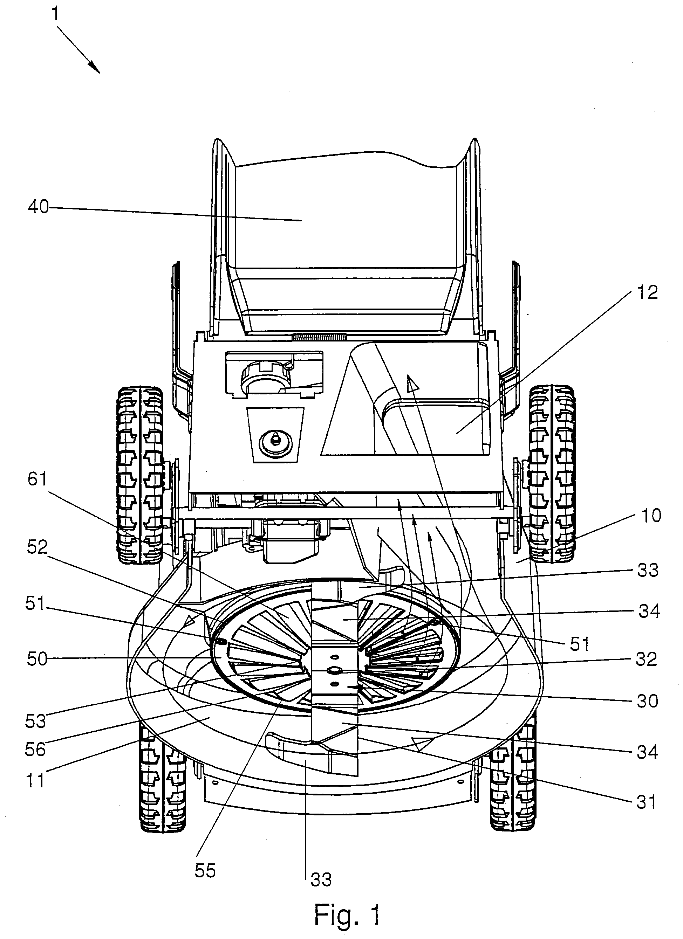

With particular reference to figures 1-3, a lawn mower 1 comprises a load-bearing body 10 supported by two rear wheels and two front wheels, a motor 20 supported by the load-bearing body 10, a vertical axis cutting blade 30 connected to motor 20, a bag 40 for containing the grass clippings applied at the rear of the load-bearing body 10.

The vertical axis cutting blade 30 is formed by a lamina 31 centered on a hub 32, coaxial to motor 20 according to a vertical rotation axis W. Lamina 31 is arranged for the entire direction of the length thereof, along an S axis which co-rotates with blade 30.

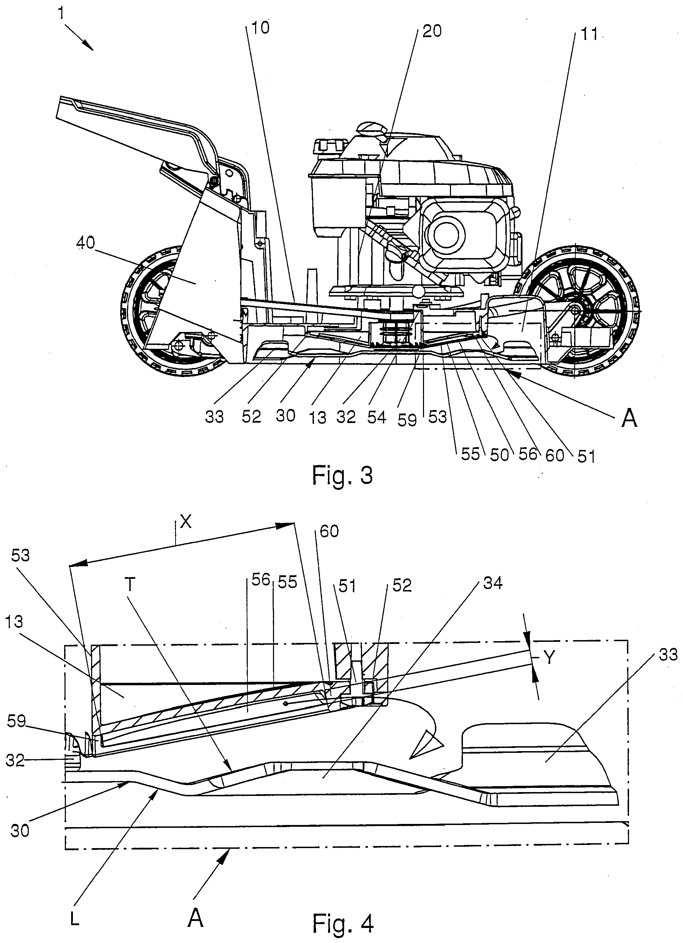

As shown in figure 4, lamina 31 is shaped so as to comprise a pair of upward folded peripheral fins 33 and overhanging in the direction contrary to the rotation sense. The central portion of lamina 31 at the rotation axis is a flat surface; the intermediate portion of lamina 31, comprised between the central portion and the peripheral portion, forms a flap 34 raising in the sense of rotation.

With reference to figure 4, due to the effect of the interaction with air during the rotation with respect to the axis of hub 32, the cutting blade 30 thus formed involves a distribution of the pressure along the profile of lamina 31 such that: an overpressure (greater than the atmospheric pressure) is formed in the upper pitch T in the peripheral portion of the blade, and a vacuum (less than the atmospheric pressure) is formed in the portion of blade comprised between the central portion and the peripheral portion; a vacuum is formed in the lower pitch L in the peripheral portion of the blade, and an overpressure is formed in the portion of blade comprised between the central portion and the peripheral portion.

The load-bearing body 10 forms internally a toroidal-shaped circular channel 11 (figure 1) which is connected to a rectilinear channel 12 departing tangent to the toroidal channel 11, to flow toward bag 40.

The walls of body 10, forming channels 11 and 12, are tapered and smooth so as to minimize the friction with the air flow and not to create an obstacle to the movement of the grass clippings dragged by the air flow along the channels 11 and 12.

Bag 40 comprises a permeable partition wall, provided with a first passageway for the grass (not depicted) and a second passageway to allow the transit of the return air (not depicted). These two passageways are positioned in two portions of the walls of bag 40 to allow the falling of the grass clippings on the bottom of the bag and the evacuation toward the outside ambient of the residual air by flowing through a connection channel between bag 40 and a central chamber 13 above the cutting blade 30.

A flange 50 separates the central chamber 13 of the lawn mower with respect to the cutting blade 30.

Flange 50 is a circular diaphragm secured to the load-bearing body 10 by means of two screws 51, delimited at the periphery by a circular edge 52 and at the middle by a cylinder 53 with a holed base by means of a circular hole 54 which is crossed by hub 32 belonging to the cutting blade 30.

With reference to figures 3 and 4, flange 50 provides a conical circular wall 55 delimited at the periphery by the circular edge 52, and toward the center by cylinder 53. According to a preferred embodiment of the invention, the conical circular wall 55 is inclined by an angle of approximately 11° with respect to a horizontal cutting plane V of the lawn mower 1.

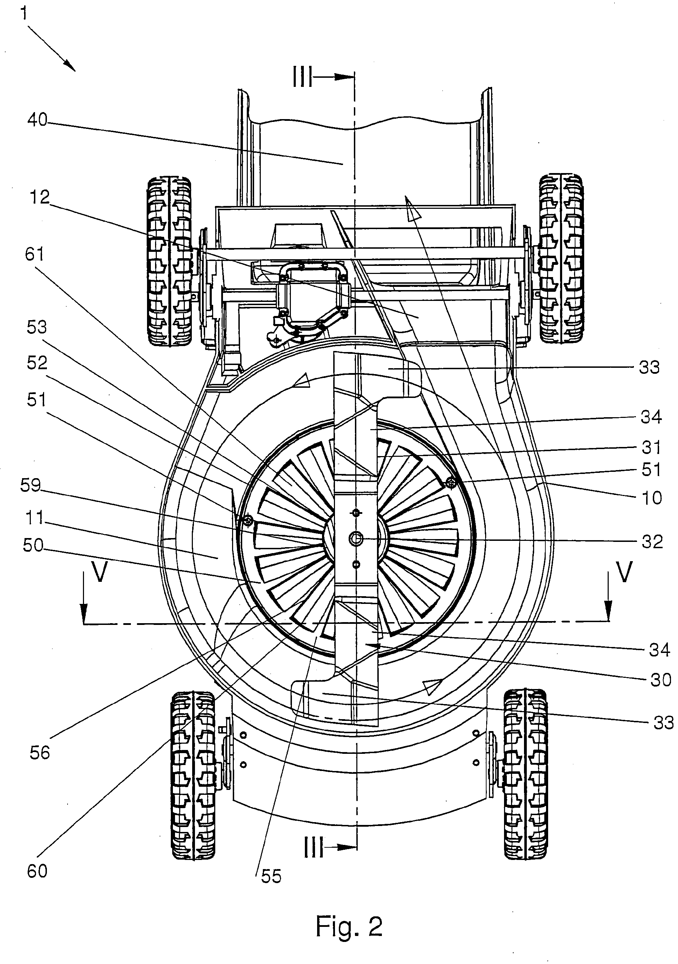

Flange 50 is provided with a series of radial curved profiles or fins 61 adapted to define a series of radial vents 56. Said fins 61 and said vents 56 are equally distributed along the conical circular wall 55 around the central rotation axis of the cutting blade 30 (figure 2).

With reference to figure 4, each radial vent 56 is shaped as a rectangle, with base X and height Y, laying on a radial plane intersecting the rotation axis W of the cutting blade 30, said rectangle being inclined by the same angle of inclination as the conical circular wall 55.

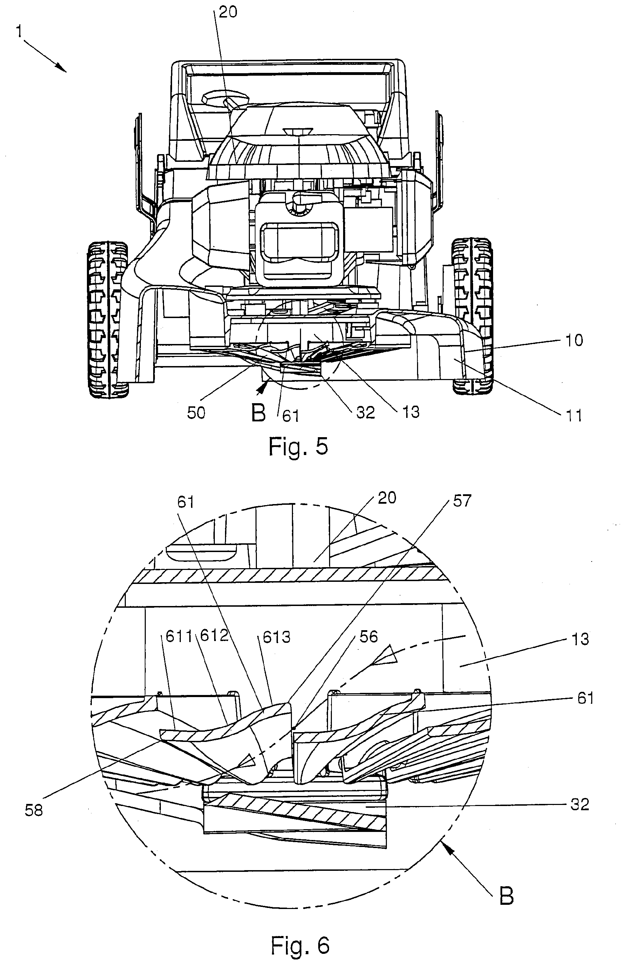

With reference to figure 6, each fin 61 provides an upper radial edge 57, a lower radial edge 58, lowered by the quantity Y corresponding to the height of the radial vent 56, a side 59, corresponding to a downward projection of the wall of the central cylinder 53, and a side 60, corresponding to the peripheral circular edge 52 and parallel to the wall of the central cylinder 53.

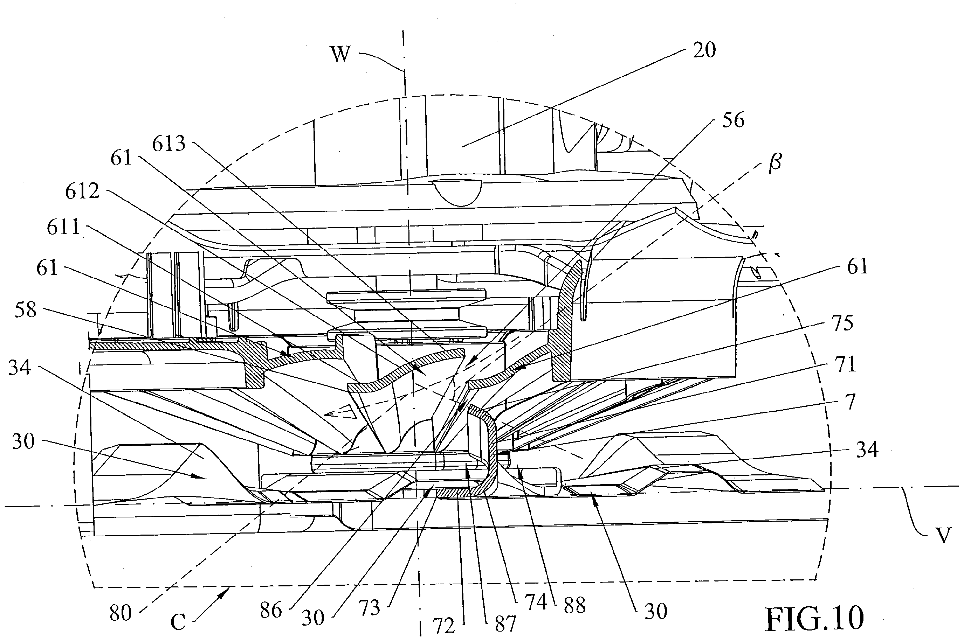

With reference to figures 5-6, 10, each fin 61 forms an S-shaped winged profile delimited by the edges 57 and 58 facing toward the central chamber 13 and toward the cutting plane V, respectively, of blade 30. More specifically, said S-shaped fin 61 provides an upward concave portion 611 connected by means of an inflection portion 612 to a upward convex portion 613. The convex portion 613 is placed in a position higher than the concave portion 611, and is facing the sense opposite to the sense of rotation of blade 30 so that the air moves along a path 80 from chamber 13 towards the cutting plane V of blade 30, as shown in figures 6, 10.

The fins 61 are placed above the two flaps 34 of blade 30 and cooperate therewith during the rotation of blade 30, thus creating the vorticose motion required of the air and re-establishing optimal conditions of the difference in pressure of the air circulating system belonging to the lawn mower 1.

The present invention absolves the object of optimizing the fluid dynamic performance of the air circulating system in the lawn mower 1.

In particular, the geometric shape of flange 50 is such that the fins 61 cover the intermediate section of blade 30 provided with the flaps 34. Substantially, the flaps 34 describe a circular portion, during the rotation of the blade, which remains in correspondence with and under said fins 61 and thus under the vents 56.

Flange 50 provided with the fins 61 allows to optimize the value of the difference in pressure required to circulate air along the channels 11 and 12 up to bag 40, and along the channel which connects bag 40 to the central annular chamber 13, thus permitting the expulsion of air from the radial vents 56.

Flange 50, which is shaped so as to cover the intermediate portion provided with flap 34 of the cutting blade 30, reduces the emission of noise and vibrations and also the emission of dust, thus at the same time ensuring cleanliness is maintained along the conduits 11 and 12 crossed by the grass clippings.

Flange 50, which is shaped with the central holed cylinder 53, further contributes to protecting the rotating components keyed onto the rotating hub 32 of the cutting blade 30 from dust and grass clippings.

Finally, it is possible to diversify the dimensions of the fins 54 by making various interchangeable flanges 50, in order to obtain different values in the differential pressure along the path of the air circulating system of the lawn mower 1, thus diversifying the operating speeds of the system according to particular needs associated with the type of grass clippings (specific weight, moisture level, etc.).

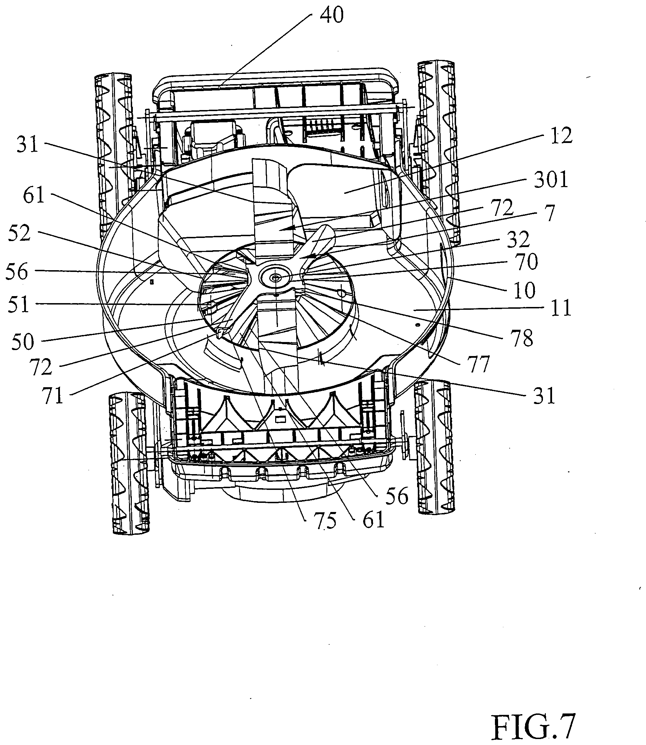

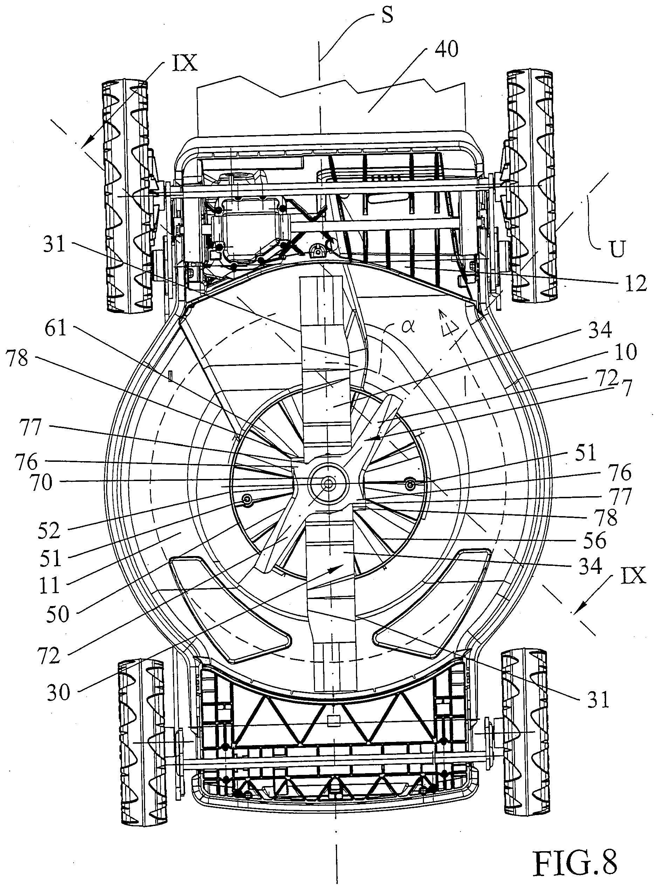

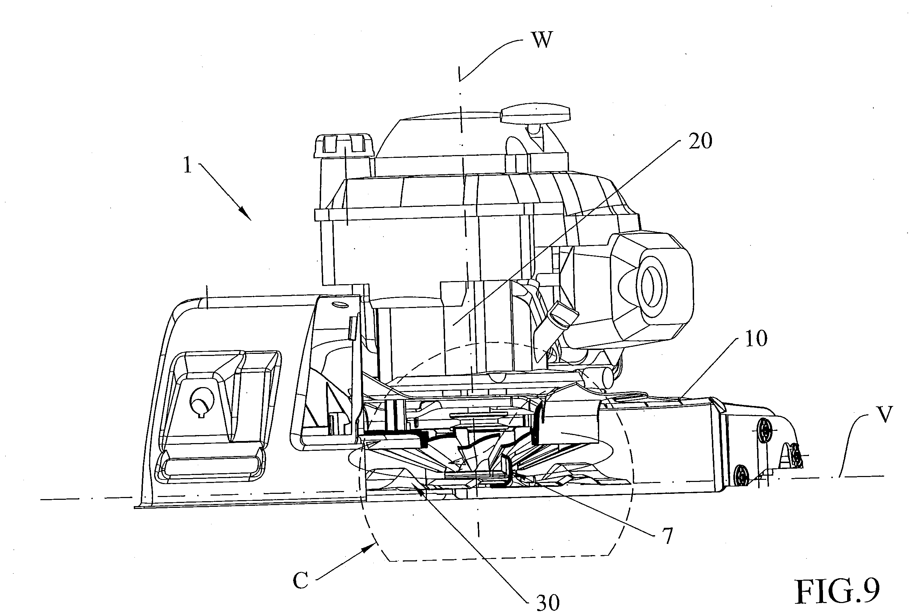

To further optimize the fluid dynamic performance of the air circulating system in the lawn mower 1 and further reduce the vibrations, noise and raising of dust, a post-compression blade 7 of the air is provided as shown in figures 7-12.

Said post-compression blade 7 is assembled integrally to blade 30 on the same vertical rotation axis W so as to rotate integrally to blade 30 during grass cutting.

The post-compression blade 7 is secured under blade 30 so that the base of the post-compression blade 7 lays on the same cutting plane V as blade 30.

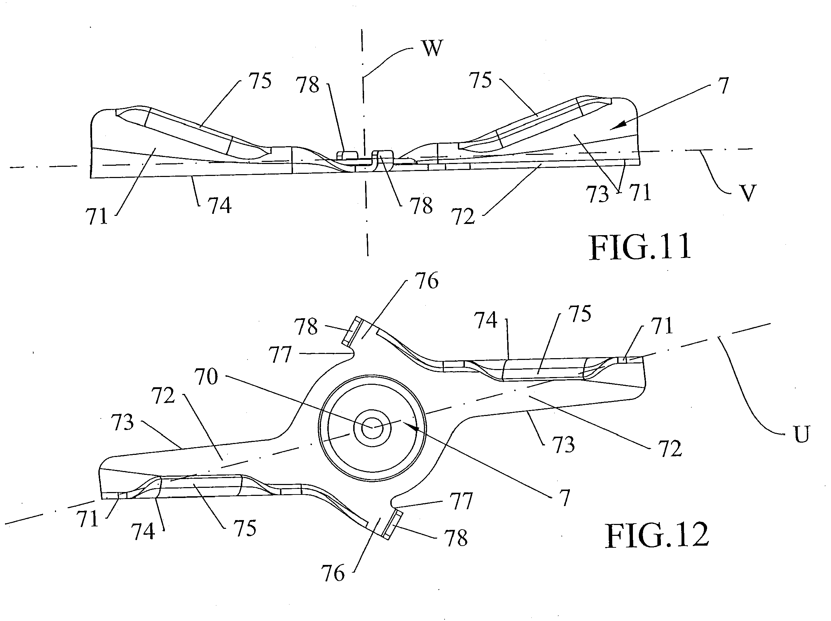

As shown in particular in figures 11-12, the post-compression blade 7, in correspondence with hub 32, provides a flat circular portion 70 which serves as base and completely covers the width of blade 30 for the entire diameter thereof.

From the circular portion 70 in two opposite directions extending according to an axis U are two flat lower strips 72, which form two opposite ends of the post-compression blade 7. Again extending from the circular portion 70 are also two flat balancing strips 76, which are diametrically opposite to the respective lower strips 72.

The post-compression blade 7 has dimensions such that the two lower strips 72 identify a slightly larger diameter along axis U with respect to the diameter of flange 50 so as to cover flange 50 during the rotation of the post-compression blade 7, in particular where the radial fins 61 are.

All four strips 72 and 76 and the circular portion 70 lay on the same cutting plane V as blade 30.

At the ends of the balancing strips 76 are provided two vertical portions 78 which remain in contact with the respective edges of blade 30 on one side, so as to serve as counterweight for balancing the torsion forces resulting from the rotation of blade 30.

Close to each edge of the balancing strip 76 facing toward blade 30 is provided a curvilinear seat 77 for fitting blade 30 and the post-compression blade 7 more firmly, and for advantageously balancing the torsion forces during rotation and the inertial forces during the braking of blade 30 when motor 20 is turned off.

Each of said lower strips 72 of the post-compression blade 7 has a flat border 73 in direction of the rotary motion of blade 30 and an opposite border 74 raised with a vertical wall 71.

As shown in figures 10-12, said vertical wall 71 of the post-compression blade 7 is arranged in a space 86 between blade 30 and flange 50 so as to compress the air in a front zone 87 in front of the vertical wall 71 in direction of motion of blade 30, and at the same time decompress the air in a rear zone 88 behind the vertical wall 71. The air flow 80 which penetrates into space 86 from the vents 56, is already at a higher pressure than the atmospheric pressure since it passes through the narrowing of vent 56 caused by the radial fins 61.

The post-compression blade 7 further compresses the air flow 80 in space 86, since, the post-compression blade 7 being in rotary motion, it compresses the air in the front zone 87 thus increasing the pressure locally. The post-compression blade 7 decompressing the air in the rear zone 88 allows the pressure to be locally decreased and allows the air to be attracted more quickly by the vents 56 thus increasing the speed and advantageously allowing an increased airflow within space 86.

This results in the post-compression blade 7 locally creating large pressure variations in the air along the entire path of the air within toroid 11 during the rotary motion thereof. Much higher pressures than the existing ones in the known state of the art can be provided locally in the front zones 87. Thus, the post-compression blade 7 advantageously allows much higher pressures to be obtained which allow dragging the grass clippings into the bag much more effectively, thus avoiding the clogging of the channels along the path.

The arrangement of the post-compression blade 7 along axis U, which forms an angle α that is less than 90° and preferably is about 30°, with respect to axis S of blade 30 allows the post-compression blade 7 to follow the rotation of blade 30. Thereby, the front zone 87, having a higher pressure, is arranged immediately after the cutting lamina 31 of blade 30 so as to oppose a strong propulsive thrust against the grass clippings such as to overcome the chaotic motions of the grass clippings along the path of toroid 11. The strong pressure exerted in the front zone 87 allows the air, which is in front of the vertical wall 71 of the post-compression blade 7, to push the grass clippings without causing them to hit the vertical wall 71, or only to a minor extent. The fact that the grass clippings are pushed by the air without wearing the rotating components other than the grass cutting lamina 31 is extremely advantageous, because it allows to strongly decrease the wear of all the other portions of blade 30 and of the post-compression blade 7.

Furthermore, the post-compression blade 7 allows higher pressures to be reached, thus resolving the technical problem of the vibrations, noise and raising of dust, given that the variations in pressure are only local and change over time while synchronously following the rotary motion of the post-compression blade 7. Angle α may be varied to further reduce the vibrations and noise of the lawn mower 1.

The post-compression blade 7 therefore advantageously allows the air flow 80 to be further compressed even more thus serving as a true post-compression system after the inlet of air from the vents 56 of flange 50, thus creating different pressure gradients which co-rotate in space 86 synchronously with the post-compression blade 7, thus creating an advantageously well-directed air flow in the path of toroid 11.

The upper portion of the vertical wall 71 further provides an upper strip 75 inclined with respect to the vertical identified by the vertical wall 71 so that the lower strip 72, the vertical wall 71 and the upper strip 75 form a C-section, as shown in figure 10. Said C-shape of the section of the post-compression blade 7 allows better channelling the air flow 80 coming from the vents 56 of flange 50 without dispersing the air neither downward, the air being blocked by the lower strip 72, nor upward, the air being blocked by the upper strip 75.

As shown in figure 10, the upper strip 75 is inclined by an angle β with respect to the air flow 80 which penetrates from the vents 56. Angle β is selected so as to cause the air flow 80 to reach a stall condition with the upper strip 75, so that the air flow 80 remains in space 86 without pushing the post-compression blade 7 out of its seat. Furthermore, said stall condition caused by the inclination of the upper strip 75 with respect to the air flow 80 which penetrates from the vents 56 of flange 50, prevents the post-compression blade from being pushed downward and therefore out of its seat by the forces caused by the pressure gradients of the pressurized air flow in space 86 when the post-compression blade 7 rotates. Angle β may be determined in first approximation by ideally extending edge 58 of the radial fin 61 downward until ideally intercepting the upward extension of the upper strip 75.

Alternatively, a blade 30 may be provided without peripheral fins 33, as shown in figures 7-10.

## Claims

1. A lawn mower (1) comprising a load-bearing body (10), a motor (20) supported by the load-bearing body (10), a cutting blade (30) connected to the motor (20), a bag (40) for containing the grass clippings applied to the rear of the load-bearing body (10), a flange (50) provided with a series of vents (56) and applied to the body (10) so as to separate a central chamber (13) from the cutting blade (30), a post-compression blade (7) for an air flow (80) coming from the vents (56) being arranged in a space (86) between the blade (30) and the flange (50), adapted to create pressure gradients of the air flow (80) during rotation, **characterized in that** the post-compression blade (7) is mounted integrally to the cutting blade (30) and comprises a circular portion (70) from which two flat lower strips (72) extend in two opposite directions according to an axis (U), the two flat lower strips (72) forming two opposite ends of the post-compression blade (7), each of said lower strips (72) comprising a flat border (73) in direction of the rotary motion of the cutting blade (30) and an opposite border (74) raised with a vertical wall (71).

2. Lawn mower (1) according to claim 1, **characterized in that** the axis (U) of the post-compression blade (7) is inclined by an angle (α) with respect to an axis (S) in the direction of the length of the cutting blade (30), allowing the post-compression blade (7) to follow the rotation of the cutting blade (30), the post-compression blade (7) being sized to cover the flange (50) during rotation, in particular where radial fins (61) defining the vents are arranged, the vertical wall (71) of the post-compression blade (7) being arranged in the space (86) between the cutting plane (V) and the flange (50).

3. Lawn mower (1) according to claims 1-2, **characterized in that** the upper portion of the vertical wall (71) of the post-compression blade (7) provides an upper strip (75) inclined with respect to the vertical identified by the vertical wall (71), said upper strip (75) inclined by an angle (β) with respect to the air flow (80) which penetrates from the vents (56) of the flange (50) is suitable for keeping the air flow (80) in the space (86).

4. Lawn mower (1) according to claims 1-3, **characterized in that** said post-compression blade (7) rotates about the same vertical rotation axis (W) of the cutting blade (30) and the circular portion (70) and the lower strips (72) of the post-compression blade (7) laying on the same cutting plane (V) of the cutting blade (30).

5. Lawn mower (1) according to claims 1-4, **characterized in that** the circular portion (70) of the post-compression blade (7) comprises two balancing strips (76) diametrically opposite to the lower strips (72), each comprising a vertical portion (78) and seats (77) suitable for fitting the cutting blade (30) more firmly thus balancing the torsion forces during rotation and the inertial forces during braking of the cutting blade (30).

## Patentansprüche

1. Rasenmäher (1) mit einem Lasttragekörper (10), einem vom Lasttragekörper (10) abgestützten Motor (20), einem mit dem Motor (20) verbundenen Schneidmesser (30), einem rückseitig von dem Lasttragekörper (10) angebrachten Sack (40) zum Aufnehmen des Grasschnitts, einem Flansch (50), der mit einer Reihe von Öffnungen (56) versehen ist und an dem Körper (10) derart angebracht ist, dass eine zentrale Kammer (13) von dem Schneidmesser (30) getrennt ist, und mit einer Nachverdichtungsklinge (7) für einen von den Öffnungen (56) kommenden Luftstrom (80), die in einem Raum (86) zwischen dem Messer (30) und dem Flansch (50) angeordnet ist und dazu ausgebildet ist, Druckgradienten des Luftstroms (80) während einer Drehbewegung zu erzeugen,
**dadurch gekennzeichnet, dass** die Nachverdichtungsklinge (7) in integraler Weise an dem Schneidmesser (30) angebracht ist und einen kreisförmigen Bereich (70) aufweist, von dem sich zwei flache untere Streifen (72) in zwei entgegengesetzten Richtungen in Bezug auf eine Achse (U) weg erstrecken, wobei die beiden flachen unteren Streifen (72) zwei gegenüberliegende Enden der Nachverdichtungsklinge (7) bilden, wobei jeder der unteren Streifen (72) einen flachen Rand (73) in Richtung der Drehbewegung des Schneidmessers (30) und einen angehobenen, gegenüberliegenden Rand (74) mit einer vertikalen Wand (71) aufweist.

2. Rasenmäher (1) nach Anspruch 1,
**dadurch gekennzeichnet, dass** die Achse (U) der Nachverdichtungsklinge (7) in einem Winkel (α) gegenüber einer Achse (S) in Richtung der Länge des Schneidmessers (30) geneigt ist, der es der Nachverdichtungsklinge (7) ermöglicht, der Drehbewegung des Schneidmessers (30) zu folgen, wobei die Nachverdichtungsklinge (7) derart dimensioniert ist, dass sie den Flansch (50) während der Drehbewegung überdeckt, insbesondere wo die Öffnungen bildende Radialrippen (61) angeordnet sind, wobei die vertikale Wand (71) der Nachverdichtungsklinge (7) in dem Raum (86) zwischen der Schneidebene (V) und dem Flansch (50) angeordnet ist.

3. Rasenmäher (1) nach den Ansprüchen 1-2,
**dadurch gekennzeichnet, dass** der obere Bereich der vertikalen Wand (71) der Nachverdichtungsklinge (7) einen oberen Streifen (75) bildet, der in Bezug auf die durch die vertikale Wand (17) identifizierte Vertikale geneigt ist, wobei der obere Streifen (75), der in einem Winkel (β) in Bezug auf den Luftstrom (80) geneigt ist, der durch die Öffnungen (56) des Flansches (50) hindurchtritt, dazu geeignet ist, den Luftstrom (80) in dem Raum (86) zu halten.

4. Rasenmäher (1) nach den Ansprüchen 1-3,
**dadurch gekennzeichnet, dass** sich die Nachverdichtungsklinge (7) um die gleiche vertikale Drehachse (W) des Schneidmessers (30) dreht und der kreisförmige Bereich (70) und die unteren Streifen (72) der Nachverdichtungsklinge (7) in der gleichen Schneidebene (V) des Schneidmessers (30) liegen.

5. Rasenmäher (1) nach den Ansprüchen 1-4,
**dadurch gekennzeichnet, dass** der kreisförmige Bereich (70) der Nachverdichtungsklinge (7) zwei Ausgleichsstreifen (76) aufweist, die den unteren Streifen (72) diametral gegenüberliegen und jeweils einen vertikalen Bereich (78) und Sitze (77) aufweisen, die geeignet sind, das Schneidmesser (30) fester anzubringen sowie dadurch die Torsionskräfte während der Drehbewegung und die Trägheitskräfte während des Abbremsens des Schneidmessers (30) auszugleichen.

## Revendications

1. Tondeuse à gazon (1) comprenant un corps de support de charge (10), un moteur (20) supporté par le corps de support de charge (10), une lame de coupe (30) raccordée au moteur (20), un sac (40) pour contenir les débris d'herbe, appliqué sur l'arrière du corps de support de charge (10), une bride (50) prévue avec une série d'évents (56) et appliquée sur le corps (10) afin de séparer une chambre centrale (13) de la lame de coupe (30), une lame de post-compression (7) pour un écoulement d'air (80) provenant des évents (56) qui est agencée dans un espace (86) entre la lame (30) et la bride (50), adaptée pour créer des gradients de pression de l'écoulement d'air (80) pendant la rotation, **caractérisée en ce que** la lame de post-compression (7) est montée de manière solidaire sur la lame de coupe (30) et comprend une partie circulaire (70) à partir de laquelle deux bandes inférieures plates (72) s'étendent dans deux directions opposées selon un axe (U), les deux bandes inférieures plates (72) formant deux extrémités opposées de la lame de post-compression (7), chacune desdites bandes inférieures (72) comprenant une bordure plate (73) dans la direction du mouvement rotatif de la lame de coupe (30) et une bordure opposée (74) levée avec une paroi verticale (71).

2. Tondeuse à gazon (1) selon la revendication 1, **caractérisée en ce que** l'axe (U) de la lame de post-compression (7) est incliné selon un angle (α) par rapport à un axe (S) dans la direction de la longueur de la lame de coupe (30), permettant à la lame de post-compression (7) de suivre la rotation de la lame de coupe (30), la lame de post-compression (7) étant dimensionnée pour recouvrir la bride (50) pendant la rotation, en particulier où sont agencées des ailettes radiales (61) définissant les évents, la paroi verticale (71) de la lame de post-compression (7) étant agencée dans l'espace (86) entre le plan de coupe (V) et la bride (50).

3. Tondeuse à gazon (1) selon les revendications 1 à 2, **caractérisée en ce que** la partie supérieure de la paroi verticale (71) de la lame de post-compression (7) fournit une bande supérieure (75) inclinée par rapport à la verticale identifiée par la paroi verticale (71), ladite bande supérieure (75) inclinée selon un angle (β) par rapport à l'écoulement d'air (80) qui pénètre par les évents (56) de la bride (50) est appropriée pour maintenir l'écoulement d'air (80) dans l'espace (86).

4. Tondeuse à gazon (1) selon les revendications 1 à 3, **caractérisée en ce que** la lame de post-compression (7) tourne autour du même axe de rotation vertical (W) de la lame de coupe (30) et la partie circulaire (70) et les bandes inférieures (72) de la lame de post-compression (7) se trouvant sur le même plan de coupe (V) de la lame de coupe (30).

5. Tondeuse à gazon (1) selon les revendications 1 à 4, **caractérisée en ce que** la partie circulaire (70) de la lame de post-compression (7) comprend deux bandes d'équilibrage (76) diamétralement opposées aux bandes inférieures (72), comprenant chacune une partie verticale (78) et des sièges (77) appropriés pour monter la lame de coupe (30) plus fermement, équilibrant ainsi les forces de torsion pendant la rotation et les forces d'inertie pendant le freinage de la lame de coupe (30).
